(19) Europäisches Patentamt / European Patent Office / Office européen des brevets

(11) **EP 3 254 034 B1**

(12) **EUROPEAN PATENT SPECIFICATION**

(45) Date of publication and mention of the grant of the patent:
**29.12.2021 Bulletin 2021/52**

(21) Application number: **15722589.7**

(22) Date of filing: **05.02.2015**

(51) Int Cl.:
*F24H 1/10* (2006.01)          *F24H 1/14* (2006.01)
*B60N 2/56* (2006.01)          *H05B 3/58* (2006.01)

(86) International application number:
**PCT/IB2015/050868**

(87) International publication number:
**WO 2016/124978 (11.08.2016 Gazette 2016/32)**

(54) **CAPILLARY PROXIMITY HEATER WITH HIGH ENERGY SAVING EQUIPPED UPSTREAM OF A MICROFILTRATION APPARATUS FOR THE ELIMINATION OF CALCAREUOS PARTICLES PRESENT IN FLUIDS AND DOWNSTREAM OF A NOZZLE OR CLOSED CIRCUIT**

KAPILLARPROXIMITÄTSHEIZGERÄT MIT HOHER ENERGIEEINSPARUNG VOR EINER MIKROFILTRATIONSVORRICHTUNG ZUR ENTFERNUNG VON KALKHALTIGEN PARTIKELN IN FLÜSSIGKEITEN UND NACH EINER DÜSE ODER EINES GESCHLOSSENEN KREISLAUFS

DISPOSITIF CHAUFFANT CAPILLAIRE DE PROXIMITÉ À HAUTE ÉCONOMIE D'ÉNERGIE ÉQUIPÉ EN AMONT D'UN APPAREIL DE MICROFILTRATION POUR L'ÉLIMINATION DE PARTICULES CALCAIRES PRÉSENTES DANS DES FLUIDES ET EN AVAL D'UNE BUSE OU D'UN CIRCUIT FERMÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.12.2017 Bulletin 2017/50**

(73) Proprietors:
• **Torchio, Giorgio**
  **14013 Monale (AT) (IT)**
• **Bellinvia, Silvio**
  **10098 Rivoli TO (IT)**

(72) Inventors:
• **Torchio, Giorgio**
  **14013 Monale (AT) (IT)**
• **Bellinvia, Silvio**
  **10098 Rivoli TO (IT)**

(74) Representative: **Garavelli, Paolo**
  **A.BRE.MAR. S.R.L.**
  **Consulenza in Proprietà Industriale**
  **Via Servais 27**
  **10146 Torino (IT)**

(56) References cited:
**EP-A1- 1 719 958          WO-A1-2006/051226**
**WO-A2-2009/049909          DE-A1- 4 208 675**
**US-A- 4 650 964          US-A- 5 590 240**

• **KANDLIKAR S G: "Fundamental issues related to flow boiling in minichannels and microchannels", EXPERIMENTAL THERMAL AND FLUID SCIENCE, ELSEVIER SCIENCE INC, NEW YORK, US, vol. 26, 1 January 2002 (2002-01-01), pages 389-407, XP002375859, ISSN: 0894-1777, DOI: 10.1016/S0894-1777(02)00150-4**

**Description**

The present invention relates to the field of heating fluids, preponderantly water, though the use of electric current, in particular is a device for heating fluids with high energy saving through the use of electrical current delivered properly after electronic control named -"fluids"-, after having been micro-filtrated, are put under pressure in one or more tube of capillary dimension, and subsequently leaving the device to the desired temperature and pressure by means of the nozzle.

The production of hot water for domestic use and for the operation of appliances in the wash-cycle as for the board, that for the preparation of hot drinks (such as tea or coffee) or to the solution of other domestic work are well known.

However, the technologies used are closely related to the use of electrical resistances of more or less large sizing and electric consumption, even with an improved efficiency in recent years are still high, with negative consequences for the environment and for the economy of the user.
Fluid warming is a process which in old ages for example was effected by means of heating with fire or embers (eg. water) without the ability to control the temperatures intermediate between the solid state, ice and gaseous phase, the vapor.

Romans with their thermal baths revolutionized heating systems.

In ancient thermal elements, indispensable for the operation, were a conspicuous and continuous availability of water for swimming pools and tanks, and a constant heat to cool or heat a lot of thermal environments, making it enjoyable and beneficial the prolonged stay in them, where these elements arose naturally from the soil (earth), that was the first use of geothermal energy.

Roman's engineering skill reached the highest levels. They were able to develop a system of water supply and heating to guarantee the perfect functioning of massive complex.

At the base of the water supply, as in the spa, swimming pools and fountains in the cities, there were romans aqueducts, capable of transporting, using the force of gravity, large quantities of water from springs and lakes to urban centers, where it was channeled over a system of arches and through the ducts until the plants of destination.

The first aqueduct built in Rome to feed a spa was one of the "Aqua Virgo", built by "Agrippa" in the first century B.C. to ensure plenty of water to their baths in the "Campus Martius", thereafter every bath complex was connected to aqueduct.

The water was channeled into large cisterns built nearby and brought to the plant through pipes of lead or clay; reached its destination, however, the water needed to be heated, as the base of the spa was just practice the alternation and the availability of both cold and hot water: the heating was obtained through special boilers housed in the baths used in the oven, fired with great amount of wood. The maintenance of the water inside of the pools of the desired temperature was obtained with an ingenious expedient, the so-called "testudo alvei", a boiler by the unique tortoise shape, heated directly and continuously from the furnace and inserted in the wall of the tank bottom.

Over the centuries the water heating technology has evolved until reaching the first attempt of industrial application of the steam boiler that was made by Savery for lifting water (1689) in English mines. However, until the Watt's vapor machine invention, the steam pressure was not pushed to slightly above atmospheric pressure. For a long time during the 19th Century the techniques of steam boilers was fixed on the kettles, filled by Watt of gauges and pressure gauges, keeping the pressure less than 4 atmospheres. The numerous explosions of boilers that occurred inspired the invention of "safe boilers", which seem to have originated in the United States. The introduction of water tube boilers and progress of metal structures and applied thermodynamics gave more rapid development of the evolution of steam boilers, so the technology arrived to produce steam at a pressure of 10-12 and, exceptionally, 16-18 atmospheres.

In recent years are produced the high and very high pressures (from 50 to 100 atmospheres), and even boilers to 224 atmospheres (critical pressure).

The steam boiler today constitutes the essential part of a complex system apparatus, that is the steam generator, the system in which the thermal energy produced by the fuel is converted into energy.

Today the water heating in home appliances occurs mostly through the use of a resistance. The resistance is the element, normally made of copper coil, which is used to heat the water or fluids.

The usually heating operation is made by the electricity energy, passing within this, it heats the copper part which, in contact with the water yield its heat. To avoid that the electrical energy in contact with water does not cause a short circuit, the resistance is provided with a ceramic insulation inside the filament where it passes between the current and the copper part that allows the transfer of heat from this energy.

The reason for which the electrical energy that crosses an electric filament generates heat is called Joule Effect, a well-known physical law, which is the basis of most modem heating technologies and that, generically, "governs" any energy transformation of electricity in other forms of energy. The Joule Effect, therefore, asserts that the power transferred to the material in which flows an electric current is given by the following formula: $P=VI$, which shows that the electric power (P) supplied is directly proportional to the electric potential (V) as well as directly proportional to the electric intensity (I) that circulates in the circuit itself.

Thanks to the discovery of Joule we now know that the heat is nothing else than a form of energy, in particular a "degraded" energy. This kind of energy can hardly be transformed into another form of energy instead, for example, the kinetic energy or gravitational energy that are easily transformable.

The heat, in fact, is the sum of the kinetic energies of atoms and molecules forming a body and the index of this kinetic energy, of each particle, is the temperature. Similarly, the electrical current is no more than the ordered motion, generated by an electric field, of electrons having a kinetic energy. When the flow of electrical charges through a resistance, the kinetic energy from the electric charges (electrons) is disposed of, in part or totally, to the material in which the same electric current passes.

In its macroscopic shape, applying Ohm's Law $(R = \dfrac{v}{I})$ , the Joule Formula can be expressed with the following equation P=RI2 where, V=RI.

The electrical power is thus directly proportional to the resistance (R) of the circuit and to the square of the intensity of the electric current (I).

In cases of domestic appliances, the resistor has two terminals, called electric poles to which are connected the electrical supply cables of the domestic appliances itself.

The appliance is electrically powered. There are numerous patents in the field of heating fluid, but from research carried out not highlighted similarities with our Invention. We cite some examples of state of the art even if very different from our invention.

US6067403, by IMETEC, that describes an electrical steam generator where the water level within the boiler is stabilized by electronic and/or pneumatic action and the electronic action being actuated by a temperature sensor positioned on that portion of the body of a usual armored resistance element which is subject to emergence following reduction in the water level, to activate a make-up micro-pump transferring into the boiler cold water drawn from a reservoir, pneumatic action being actuated by a floating valve enabling air to enter during boiler cooling, in order not to enable the boiler to draw water from the reservoir through the body of the halted micro-pump. This invention is not in any way comparable to our invention.

GB2485162 "Modular heating system", where a boiler unit compnses an enclosure including a first circuit of a first fluid heat exchange medium, such as steam, and a second circuit of a second heating system fluid heat exchange medium, preferably for central heating and/or domestic hot water. The first circuit has a heating device to heat the first medium, a heat exchanger, a valve and a first manifold. The second circuit has a flow and return port of the boiler unit, a second manifold and the heat exchanger for exchange of heat between the first and second heat exchanger media when the valve is open. A space in the enclosure receives an auxiliary unit, preferably comprising an organic Rankine cycle (ORC) incorporating an electrical generator, which is driven by the first fluid heat exchange medium. A boiler control unit is provided to control operation of the heating device according to its heat demand irrespective of the auxiliary unit, when connected. In use, the boiler and auxiliary unit together form a micro CHP system. In further aspects, an ORC module comprising a control unit and a frame, and a mounting in a frame for a vibrating unit, are disclosed. This invention is not in any way comparable to our invention.

US20120132643 A1 by SAMSUNG Electronics, where a microheater and a microheater array are provided. The microheater includes a substrate, a column disposed on the substrate and a bridge supported by the column. A width of a portion of a bridge formed on the column is less than a width of a portion of the bridge that does not contact the column. The bridge may include a spring component. This invention is not in any way comparable to our invention. EP-A1-1719958, US-A-4650964, WO-A1-2006/051226, US-A-5590240, DE-A1-4208675 and WO-A2-2009/049909 disclose heating apparatuses for fluids. In particular WO 2009/049909 A2 discloses a heating apparatus for fluids comprising a capillary tube heater, a microfiltration apparatus connected upstream to said capillary tube heater in the sense of flow of fluid to be heated, and electronic control card, a nozzle and a pump.

The present invention overcomes the technical problems described above, thanks to a new system that allows the heating of water with variable flow and with an important energy saving. This invention works by flows with extremely small microscopic sections of passage of fluids, with only a tube of capillary dimension. The flows for normal domestic or industrial sizing (eg ¾ or 1 inch or more up to 394 inches), an inch being 2.54 cm can be made by multiplication in a bundle of capillary tubes or, separately, up to the number necessary to obtain the flow of hot fluid (eg water) which protrudes from a nozzle or by a connecting element (closed circuit) of the desired size. The fluid leaving or circulating is pressure and temperature controlled, through the use of an electronic system, of a known technology, suitably calibrated according to the type of desired result.

The use of the present invention allows an important energy saving compared to conventional heating systems of fluids (eg water) until now in use. This saving is quantifiable in not less than sixty percent (60%). The saving are generated by the combined effects of the use of a steel with very high transmissivity, the heat generated by electric poles appropriately positioned that, together, with the management of the electronic card, provides a proper balanced heat.

The present invention also solves other technical problems, drastically decrease the dispersion, does not require a mixer in order to reach the desired temperature. The item is regulated by an electronic card that is in managed by a display or multifunctional regulator with adjustable temperature and continuous flow of known art.

According to the invention with the aggregated bundles of capillary tubes also the heat balance from the outside of the beam to the center of the bundles is electronically controlled. This system allows a further saving due to the congruence of heated capillary tubes positioned next to each other, where the electronic card controls automatically, it determines constant and immediate energy power transmitted to each tube. The energy will be used gradually lower as closer you get to the (eg ¾ [1,91 cm]or 1 inch [2,54 cm] or more up to 394 inches [746,76 cm]) center of the beam because the heat transfer is created, by convection and radiation, from the external capillary tubes to internal ones or also by conduction if the tubes are in contact between each other.

This invention also resolves the known problem relating to the accumulation, inside the pipe or in the proximity of joints, of limestone through the water (or fluid) microfiltration upstream of the capillary tube or tubes beam, with a preferred measure of 20 micron, however between a minimum of 15 micron and a maximum of 50 micron, over the slaughter of limestone for ion exchange effect to the extent of over 95%. The present invention also resolves the problem of a large period of thermal inertia, present in many appliances or heaters, reducing it drastically, by more than 95%, with an obvious increase of energy saving.

Considering that this invention produces an immediate heating of the desired fluid to the wanted temperature combined with the proximity of the nozzle leakage, or closed circuit, we obtain a further energy saving of over 60% due to the factors mentioned; this with a very substantial benefit to the environment and to the global economic cycle.

The necessary Joule quantity, for example, to heat the water quantity normally used by domestic machines to produce e.g. an express coffee, taking in consideration the heating time, the stand by time and also the erogation coffee time is normally between 50.000 to 90.000 Joule.

With our invention for the same operation the consumption is about 8000 Joule with an energy efficiency superior of 87%.

For purposes of the present invention, the term heater includes a heating apparatus of various known techniques, which may be operating with different forms of energy. The heater has the task of heating fluids (e.g. water) for industrial use or both for domestic use e.g. shower, washing machine, dishwasher, flat iron, hot drinks machines (e.g. coffee and or tea), radiators, etc. Another possible application of this invention is, for example, the heating of car cockpits or the seat heating to warm the car.

In the context of the present invention for "Capillary proximity heater with high energy saving equipped upstream of a microfiltration apparatus for the elimination of calcareous particles present in fluids and downstream of a nozzle or closed circuit" means a heater that can be operated either electrically or with batteries or with electricity generators (fuel cell) thanks to the fact that the electric consumption of the invention is particularly low. In the context of the present invention for microfiltration apparatus we mean a filtering apparatus which retains impurities from 15 micron and at least 95% of limestone.

There is disclosed a capillary proximity heater (1) with high energy savings, subject to appropriate electrical voltage and equipped, upstream, with a microfiltration apparatus (9) for the elimination of calcareous particles present in fluids and, downstream, of the nozzle 7 or closed circuit comprising:

a) one or multiple capillary, steel or graphene, tubes (1) with high thermal transmissivity;
b) a bipolar electrical connection (2);
c) one or more hydraulic devices for opening and closing the fluid flow into the capillary tubes (1);
d) one or more nozzles (7) for the outflow of hot fluid, or links to closed circuit or heat exchangers;
e) an electronic card (4) with multi-function display for controlling flow and temperature of the fluids according to the needs, the card (4) can also be used for integration of the electronic structure of the apparatus (eg household appliance). An object of the present invention is a capillary proximity heater 1 with high energy saving that generates the continuous (if not adjusted) heating of fluids (eg water) at the desired temperature .

The direct use of this invention (faucets, showers, radiators etc.) or as support to other equipment such as washing machine, dishwasher, iron, machines to dispense hot drinks (eg coffee or tea), equipment for the creation of steam or, in the automotive field, for heating passenger compartments or seats of cars, is also disclosed.

These and other objects of the present invention will be illustrated below in detail also by means of figures and examples.

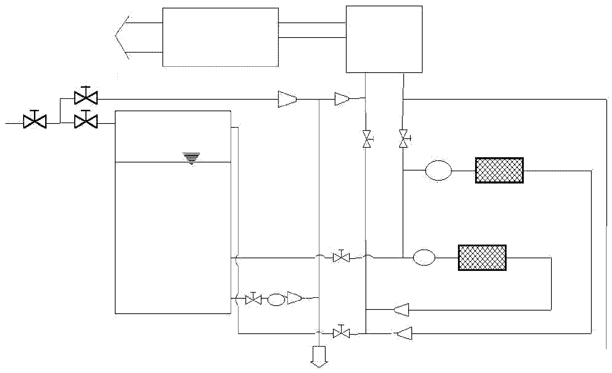

Figure 1: Example of a circuit diagram of a traditional water (or generically fluid) heater known for the production of hot water (fluid).
Figure 2: Illustration of an embodiment of the present invention.

Figure 3: Illustration of an example of an industrial application of the present invention in the automotive industry field for heating car's passenger seats.

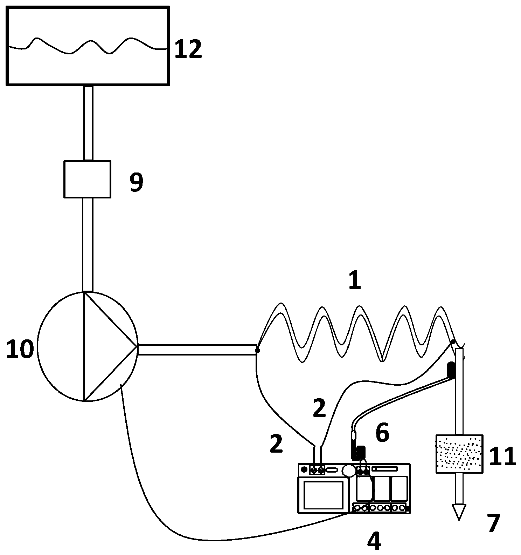

Figure 4: Circuit diagram of a further use in an appliance of the present invention, a domestic dispenser of hot drinks (tea, coffee, chocolate, tea, etc).

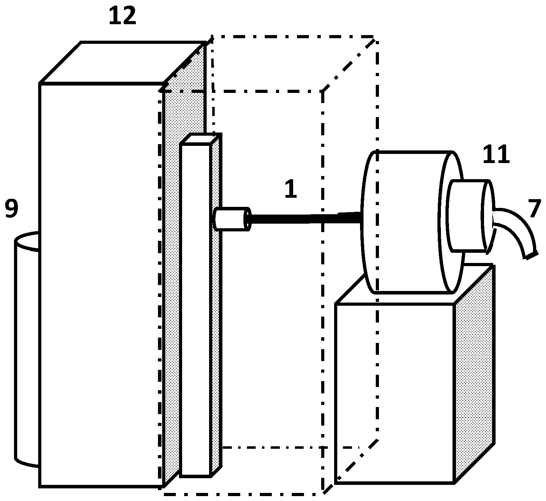

Figure 5: Illustration of a further use in an appliance of the present invention, domestic dispenser of hot drinks (tea, coffee, chocolate, tea, etc).

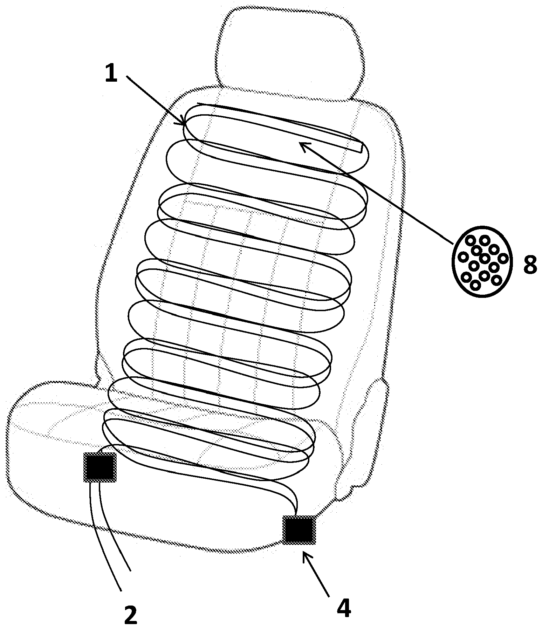

For the production of the proximity capillary heater with high energy savings, subjected to appropriate electrical voltage (2) and equipped, upstream of the microfiltration apparatus (9) for the elimination of calcareous particles present in fluids and, downstream, of the nozzle (7) or connector, or closed circuit (Fig. 3) is used steel or graphene with high or very high thermal transmissivity, in case the invenction is used to produce food or drinks for human consumption the item will be industrialized in an appropriate material for foods. Such materials are well known to the expert in the field.

In a preferred, but not limited, application of the invention, a high or very high thermal transmissivity steel capillary tube (1) is used, either bare or coated with ceramic material or composite or plastic, for food use where necessary.

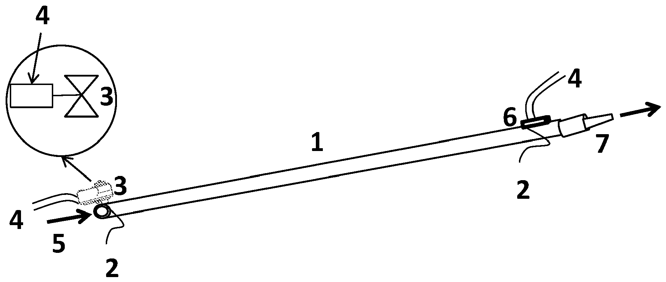

In this capillary tube (1), which can be grouped in bundles (8) as subsequently exposed (Fig. 3), are fixed (Fig. 2) electrical connections (2) which provide electrical voltage to the capillary tube (1) which will be, crossed by electric current and, therefore, by the Joule effect, heated.

This invention, appropriately and adequately protected m accordance with current international safety regulations, and according to the technical specifications IPX8, has input of an electronic remote control (4) an hydraulic micro-gate (3) that provides to open when you are asked to supply (5) hot water (or hot fluids) (12) and to close when the request is stopped.

On the opposite side of the capillary tube (Fig.2), is placed a nozzle (7) for the exit of the hot water (or hot fluids) or for connection to a closed circuit or heat exchanger, with a temperature detector (6) connected to the electronic remote control (4).

All the process of heating and dispensing, are controlled by an electronic card (4), which is adequately and appropriately constructed and calibrated for the entry of water in the capillary tube for the flow rate and pressure is atmospheric that it induced by pumps (10); the electrical power needed to heat the water to the desired temperature is more than 95% less that any other known heater system, by way of example this invenction goes from 1°C for processing into steam according to the following table (degrees Celsius):

| Pressure [bar] | | | | | | | | | | | | | | | | | |
|---|---|---|---|---|---|---|---|---|---|---|---|---|---|---|---|---|---|
| 1 | 2 | 3 | 4 | 5 | 6 | 7 | 8 | 9 | 10 | 11 | 12 | 13 | 14 | 15 | 16 | 17 | 18 |
| Temperature [°C] | | | | | | | | | | | | | | | | | |
| | | | | | | | | | | | | | | | | | |
| 100 | 120 | 134 | 144 | 152 | 159 | 165 | 171 | 175 | 180 | 184 | 188 | 192 | 195 | 198 | 201 | 204 | 208 |

According to precise calculations the power in milliWatts needed to heat the water at the temperature of 89 degrees centigrade necessary, for example, to produce a cup of coffee is of 3watt, more than 95% less than the energy today used by the apparatus for production of coffee drinks at home or professional.

Upstream of the micro hydraulic gate (3) is positioned a high performance filter (9), for microfiltration, with a preferred measurement of filtration of 20 microns, but still working in the range between 15 and 50 microns, over the slaughter of limestone for ion exchange to the extent of more than 95%, differentiable depending on water hardness, in particular area of use which shall thus retain not less than 95% of airborne particles and limestone to make sure that the capillary tube (1) is always kept clean internally.

The size of the nominal internal diameter of the tube varies from 0.13 mm (insulin needle) to 1000.00 mm. The tubes can also be aggregated into bundle 8s (8), more or less large, such as to achieve aggregations that can heat larger quantities of water or fluid for normal domestic or industrial use (eg 1.905 oe 2.54 cm (3/4" or 1") or larger). In these cases, the electronic control board (4) will be adequately calibrated to handle the desired temperature by varying continuously the electrical flows for each capillary tube being within the beam intrinsically higher temperature than the outside to the effect of known physical laws.

In a preferred embodiment of the capillary proximity heater (1) with high energy saving, subject to appropriate electrical voltage (2) and equipped, upstream of the microfiltration apparatus (9) for the elimination of calcareous particles present in fluids and, downstream of the nozzle (7) a bundle of tubes (8) capillaries under the control of the electronic board (4) provides heating of water as required at a temperature of 60 °C to serve the work of a washing machine. Even in this case the energy saving compared to a normal electrical resistance is greater than 60%.

In another preferred embodiment, a suitable number of proximity boilers serving the phone of a shower (which due to the low consumption can be powered by a battery) by heating the capillary tubes that make the water out to the desired temperature without the need for mixing with water cold.

A further preferred embodiment of the heater using proximity heating element. The water in a coffee machine involves heating of one or more capillary tubes capable to heat the water necessary for extraction from filter (11) coffee or hot drinks. Also in this case the paucity of energy required means that it is not necessary the use of electrical current from the network, but that the whole operation can be performed with a battery with a power of 8 amperes at 3,7 Volt. A preferred embodiment of the boiler proximity to high energy savings (eg ¾ [1,91 cm]or 1 inch [2,54 cm] or larger) is to make the heating of the seats and the cockpit of cars powered by combustion or electric engine (Fig. 3). Systems and leading technology, know that the absence of thermal engines on vehicles driven by electric power, stored in rechargeable batteries, is a serious problem for the winter heating of the cockpit and the seats of this type of vehicle, of difficult solution. The proximity heater also work in a closed circuit, with a remarkable energy saving, it can provide heating of the passenger compartment with the bundles of tubes (8) properly placed serpentine on the floor and on the sky of the car as well as inside of the passenger seats or where desired.

The electronic card (4) suitably calibrated will bring the temperature of the passenger compartment that desired very quickly. The same proximity heater can 'be used as well as a heater for the outlet nozzles by means of hot air. The combination of the three systems generates comfortable heat and energy savings compared to the state of the art more than 60%.

**Claims**

1. Heating apparatus for fluids comprising:

   - a capillary tube heater (1) composed of multiple capillary tubes (1) grouped in bundles (8), said capillary tube heater (1), namely a tube having a microscopic section of passage of fluids, designed to contain the fluid to be heated and connected to electric connections (2) designed to provide electrical voltage to the capillary tube heater (1);
   - a microfiltration apparatus (9) connected upstream to said capillary tube heater (1), in the sense of flow of fluid to be heated, and designed to eliminate calcareous particles present in the fluids;
   - an electronic control card (4) with multi-function display connected to the capillary tube heater (1) and designed to control flow and temperature of the fluids and the heat balance from the outside of the beam to the center of the bundles of capillary tubes
   - a nozzle (7) connected downstream to the capillary tube heater (1), in the sense of flow of fluid to be heated, and designed to exit hot fluids from the heating apparatus;
   - a temperature detector (6) operatively connected to the electronic control card (4) and placed on the nozzle (7);
   - a pump (10) connected to the capillary tube heater (1) and designed to be actuated by the electronic control card (4) to control flow-rate and pressure of water in the capillary tube heater (1); and
   - a filter (11) connected to the capillary tube heater (1) and designed to filter the hot fluids before they exit from the heating apparatus.

2. Heating apparatus for fluids according to claim 1, **characterized in that** the capillary tube heater (1) is made of high-transmissivity steel.

3. Heating apparatus for fluids according to claim 1, **characterized in that** the capillary tube heater (1) is made of graphene.

**Patentansprüche**

1. Heizgerät für Flüssigkeiten umfassend:

   - eine Kapillarrohrheizung (1), die aus mehreren Kapillarrohren (1) besteht, die in Bündeln (8) gruppiert sind, wobei die Kapillarrohrheizung (1) nämlich ein Rohr mit einem mikroskopischen Durchtrittsquerschnitt für Fluide ist, das dazu bestimmt ist, das zu behandelnde Fluid aufzunehmen beheizt und mit elektrischen Anschlüssen (2) verbunden, die dazu bestimmt sind, die Kapillarrohrheizung (1) mit elektrischer Spannung zu versorgen;
   - eine Mikrofiltrationsvorrichtung (9), die stromaufwärts des Kapillarrohrheizers (1) im Sinne des zu erwärmenden Fluidstroms angeschlossen ist und dazu bestimmt ist, in den Fluiden vorhandene Kalkpartikel zu entfernen;

- eine elektronische Steuerkarte (4) mit Multifunktionsanzeige, die an die Kapillarrohrheizung (1) angeschlossen ist und die den Durchfluss und die Temperatur der Flüssigkeiten sowie den Wärmehaushalt von der Außenseite des Strahls bis zur Mitte der Kapillarbündel regelt Rohre;
- eine Düse (7), die der Kapillarrohrheizung (1) im Sinne des zu erwärmenden Fluidstroms nachgeschaltet ist und dazu bestimmt ist, heiße Fluide aus der Heizvorrichtung auszugeben;
- einen Temperaturdetektor (6), der operativ mit der elektronischen Steuerkarte (4) verbunden ist und an der Düse (7) angebracht ist;
- eine Pumpe (10), die mit der Kapillarrohrheizung (1) verbunden ist und dazu ausgelegt ist, von der elektronischen Steuerkarte (4) betätigt zu werden, um die Durchflussmenge und den Wasserdruck in der Kapillarrohrheizung (1) zu steuern; und
- einen Filter (11), der mit der Kapillarrohrheizung (1) verbunden ist und dazu bestimmt ist, die heißen Flüssigkeiten zu filtern, bevor sie aus der Heizvorrichtung austreten.

2. Heizgerät für Flüssigkeiten nach Anspruch 1, **dadurch gekennzeichnet, dass** die Kapillarrohrheizung (1) aus hochdurchlässigem Stahl besteht.

3. Heizgerät für Flüssigkeiten nach Anspruch 1, **dadurch gekennzeichnet, dass** die Kapillarrohrheizung (1) aus Graphen besteht.

**Revendications**

1. Appareil de chauffage de fluides comprenant:

- un tube capillaire chauffant (1) composé de plusieurs tubes capillaires (1) regroupés en faisceaux (8), ledit tube capillaire chauffant (1), à savoir un tube présentant une section microscopique de passage de fluides, destiné à contenir le fluide à chauffé et connecté à des connexions électriques (2) conçues pour fournir une tension électrique au tube capillaire chauffant (1);
- un appareil de microfiltration (9) connecté en amont audit tube capillaire chauffant (1), dans le sens de circulation du fluide à chauffer, et destiné à éliminer les particules calcaires présentes dans les fluides;
- une carte électronique de contrôle (4) à affichage multifonction connectée au réchauffeur de tube capillaire (1) et destinée à contrôler le débit et la température des fluides et le bilan thermique de l'extérieur du faisceau vers le centre des faisceaux de capillaires tuyaux;
- une buse (7) reliée en aval au tube capillaire chauffant (1), dans le sens de circulation du fluide à chauffer, et destinée à sortir des fluides chauds de l'appareil de chauffage;
- un détecteur de température (6) connecté fonctionnellement à la carte électronique de commande (4) et placé sur la buse (7);
- une pompe (10) reliée au réchauffeur de tube capillaire (1) et conçue pour être actionnée par la carte électronique de commande (4) pour contrôler le débit et la pression d'eau dans le réchauffeur de tube capillaire (1); et
- un filtre (11) relié au tube capillaire chauffant (1) et destiné à filtrer les fluides chauds avant leur sortie de l'appareil de chauffage.

2. Appareil de chauffage de fluides selon la revendication 1, **caractérisé en ce que** le tube capillaire chauffant (1) est en acier à haute transmissivité.

3. Appareil de chauffage de fluides selon la revendication 1, **caractérisé en ce que** le tube capillaire chauffant (1) est en graphène.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6067403 A
- GB 2485162 A
- US 20120132643 A1
- EP 1719958 A1
- US 4650964 A
- WO 2006051226 A1
- US 5590240 A
- DE 4208675 A1
- WO 2009049909 A2